# EUROPÄISCHE PATENTSCHRIFT

(11) **EP 3 633 143 B1**
(45) Veröffentlichungstag und Bekanntmachung des Hinweises auf die Patenterteilung: **18.01.2023**
(21) Anmeldenummer: 19166134.7
(22) Anmeldetag: 29.03.2019
(51) Int. Cl.: E21F 15/00, E21F 17/16, C04B 28/00, C04B 111/00

(54) **VERFAHREN UND MATERIALIEN ZUR HERSTELLUNG EINES VERSCHLUSSBAUWERKS**
METHODS AND MATERIALS FOR PRODUCING A CLOSURE STRUCTURE
PROCÉDÉ ET MATÉRIAUX DE FABRICATION D'UNE CONSTRUCTION DE FERMETURE

(30) Priorität: 01.10.2018 DE 102018124217
(43) Veröffentlichungstag der Anmeldung: 08.04.2020
(73) Patentinhaber: Stephan Schmidt KG, 65599 Dornburg-Langendernbach (DE)
(72) Erfinder: SCHELLHORN, Dr. Matthias, 65556 Limburg (DE); DIEDEL, Prof. Dr. Ralf, 56206 Hilgert (DE)
(74) Vertreter: Müller, Eckhard

(56) Entgegenhaltungen:
- EP-A2- 2 843 190
- David Dixon ET AL: "Backfilling of deposition tunnels: Use of bentonite pellets", , 1. Februar 2011 (2011-02-01), XP055637758, Gefunden im Internet: URL:http://www.skb.com/publication/2308782 /P-11-44.pdf [gefunden am 2019-10-31]
- PATRIK SELLIN ET AL: "The Use of Clay as an Engineered Barrier in Radioactive-Waste Management - A Review", CLAYS AND CLAY MINERALS, Bd. 61, Nr. 6, 1. Dezember 2013 (2013-12-01), Seiten 477-498, XP055637769, US ISSN: 0009-8604, DOI: 10.1346/CCMN.2013.0610601
- Chun-Liang Zhang: "GRS -451 Sealing Performance of Fractured Claystone and Clay-Based Materials", , 1. März 2017 (2017-03-01), XP055637766, ISBN: 978-3-946607-38-0 Gefunden im Internet: URL:https://www.grs.de/sites/default/files /pdf/grs-451_0.pdf [gefunden am 2019-10-31]

## Beschreibung

Die vorliegende Erfindung betrifft ein Verfahren zur Herstellung eines Verschlussbauwerks, dafür geeignete Materialien und deren Verwendung in dem genannten Verfahren. Verschlussbauwerke dienen zum Verschließen von Hohlräumen, die im Untertagebau bei sogenannten Schachtbauwerken, aber auch als Dammbauwerk im Streckenverschluss auftreten.

Gefährliche Abfälle, wie z.B. hochtoxische oder radioaktive Substanzen, werden in Bergwerken deponiert und endgelagert, um sie dauerhaft von der Umwelt zu isolieren. Dies geschieht in Fässern, Trommeln oder anderen Gebinden, die in unterirdische Kavernen (Hohlräumen) verbracht werden. Ist der Nutzraum der Kaverne ausgeschöpft, wird der Freiraum zwischen den verschiedenen Gebinden mit festem Material verfüllt, um eine ausreichende Druckfestigkeit des Bergstocks unter Vermeidung möglicher Deckeneinstürze zu gewährleisten. Anschließend müssen diese Hohlräume dauerhaft wasserdicht verschlossen werden, um eine sichere Langzeitlagerung der genannten Substanzen zu garantieren.

Gemäß dem Stand der Technik wird die Abdichtung gegen Wassereintritt bei solchen Verschlussbauwerken durch sogenannte Verschlussstopfen aus Bentonit erzeugt. Dazu wird der Baustoff untertage verbracht und auch untertage verdichtet, um die geforderten geringen Wasserdurchlässigkeiten zu erzielen. Eine andere Möglichkeit besteht in dem Einsatz von BentonitFormsteinen, die übertage hergestellt und untertage als Trockenmauerwerk verbaut werden.

In der DE 101 49 972 C1 wird eine weitere Variante zum Verschließen eines untertägigen Hohlraums beschrieben. Dabei wird der Hohlraum mit einem statischen Widerlager, das direkt an den Hohlraum grenzt, verschlossen. Dann folgt ein Abschnitt aus einem bindigen Material, an den sich wiederum ein äußeres statisches Widerlager anschließt. Die Widerlager, die nicht wasserdicht sein müssen, werden in an sich bekannter Weise als herkömmliche Betonwiderlager ausgebildet.

Zwischen den statischen Widerlagern befindet sich der Abschnitt aus bindigem Material, vorzugsweise aus Bentonit oder aus Bentonitformsteinen. Das bindige Material, insbesondere Bentonit, quillt bei einer Wasseraufnahme und vergrößert sein Volumen dabei beträchtlich. Durch die Volumenvergrößerung kommt es zu einem Druckaufbau. Dieser Effekt wird genutzt, um mit Hilfe des bindigen (und gleichzeitig quellfähigen) Materials einen dauerhaft wasserdichten Verschlussstopfen für den zu verschließenden Hohlraum zu erzeugen. Hierfür ist es allerdings wiederum erforderlich, die Bentonit-Schüttungen untertage mit hydraulischen Geräten möglichst gleichmäßig zu verdichten.

Um eine gleichmäßige Befeuchtung des bindigen Materials und damit einen möglichst homogenen Druckaufbau innerhalb des Bentonit-Abschnitts zu erzeugen, wird innerhalb der Verfüllung aus dem bindigen Material mindestens eine Schicht aus einem weiteren Material angeordnet. Diese weitere Schicht befindet sich in einem Winkel von 60° bis 90° zur Wassereintrittsrichtung, ist zwischen 2 und 30 cm dick und hat eine Wasserdurchlässigkeit, die mindestens zehn Mal größer ist als die des Bentonits bzw. des bindigen Materials.

Die DE 198 56 640 A1 beschreibt ein Material zur Errichtung untertägiger Verschlussbauwerke. Dabei werden aus einer Mischung aus Sand, Ton und Bentonit Bergbau-Formatsteine verpresst. Aus diesen Steinen wird in bekannter bautechnischer Technologie eine Trockenmauer - unter Verwendung eines Tonmörtels - als untertägiges Verschlussbauwerk errichtet.

Die WO 92/10438 bezieht sich auf einen leichten Zuschlagsstoff in Form von Pellets oder Granulat und dessen Gebrauch in der Bauindustrie, wie z.B. für Bausteine, Leichtbaufüllblöcke und als Füllmittel für leichten Zement. Dieser Zuschlagsstoff besteht aus Brennstoffasche, Zement und Polystyrolkügelchen.

Allen Verfahren aus dem Stand der Technik zum Verschließen von, bevorzugt untertägigen, Hohlräumen ist somit gemeinsam, dass immer umfangreiche Arbeiten vor Ort stattfinden müssen, die in der Regel aus der Herstellung von (Trocken-) Mauern und / oder dem Verdichten des eingebrachten, bindigen Materials bestehen. Dies ist zeit- und kostenintensiv und auf Grund der besonderen Arbeitsumstände auch nicht ungefährlich.

Abhilfe schafft hier das Verfahren zur Herstellung von Verschlussbauwerken gemäß EP 2 843 190 B1, bei dem hochverdichtete Pellets aus bindigem Material (wie z. B. Bentonit) in Kombination mit einer inerten Zwickelfüllung (wie z.B. Sand von rolliger Körnung) bevorzugt im Blasversatz eingesetzt werden. Dadurch können ohne größeren Arbeitseinsatz untertage Verschlussbauwerke in nahezu beliebigen Dimensionen errichtet werden. Es werden Einbaudichten des Verschlussmaterials vor Ort von größer als 1,7 t/m³ erzielt, wobei die verwendeten Pellets eine Rohdichte von bevorzugt mehr als 2 t/m³, entsprechend einer Trockendichte von ca. 1,8 bis 2 t/ m³, aufweisen.

In der EP 2 843 190 B1 wird zur vorteilhaften Erstellung eines Verschlussbauwerks eine binäre Mischung aus (i) verdichteten Pellets aus bindigem Material und (ii) einer inerten Zwickelfüllung gelehrt, welche mechanisch weitgehend stabil ist und auch nach 300 m Versturz durch Einblasen mit Drücken von etwa 1 bar weitgehend zerstörungsfrei vor Ort eingebaut werden konnte.

Die nachfolgenden zwei Absätze (entsprechend den Abschnitten [0012] und [0013] aus der EP 2 843 190 B1) beschreiben die relevanten Sachverhalte und Parameter im Detail.

Die Anforderungen an das Verschlussmaterial sind abhängig von den Anforderungen an das daraus herzustellende Verschlussbauwerk (Quellvolumen, Quelldruck, Dichtigkeit gegenüber anstehenden Medien/Prüfflüssigkeiten), welche wiederum abhängig sind von den örtlichen Gegebenheiten, insbesondere der zu erwartenden anstehenden Wassersäule und dem sich hieraus ergebenden hydrostatischen Druck, und ob der Verschluss weitgehend oder möglichst vollständig abdichtend gegen möglichen Wassereintritt sein muss oder nur ein temporäres Bauwerk, zum Beispiel im Streckenverschluss, darstellt.

In der Regel wird das Verschlussbauwerk weitgehend wasserabdichtend sein müssen. Die sich daraus ergebenden Anforderungen an das Verschlussbauwerk und damit an das verwendete Verschlussmaterial sind dann bevorzugt durch die folgenden Parameter bestimmt: Einbaudichte des Verschlussmaterials ohne zusätzliches Verdichten vor Ort von bevorzugt größer als 1,7 t/m³ (kg/dm³), insbesondere zwischen 1,7 und 2,1 t/m³. Aufbau eines Quelldrucks im Verschlussmaterial (durch Wasseraufnahme) von mehr als 1 MPa (1 Megapascal = 1N/mm²), insbesondere von mehr als 2 MPa. Quelldruck baut sich auf, wenn eine durch Wasseraufnahme ausgelöste Volumenzunahme (Quellung) behindert wird (z.B. durch eine Auflast). Der Verschlussstopfen bzw. das Verschlussmaterial sollte darüber hinaus Wasserdurchlässigkeiten (gekennzeichnet durch den Durchlässigkeitsbeiwert k_{f} in m/s) von k_{f} kleiner als 10⁻¹¹ m/s, insbesondere von kleiner als 10⁻¹² m/s, aufweisen (Bestimmung der Wasserdurchlässigkeit nach DIN 18130).

Um höhere Trockenrohdichten zu erzielen, wird im Stand der Technik auch der Einsatz von trockengepressten Briketts aus bindigem Material in Erwägung gezogen. Diese Briketts erzielen Dichten von über 2,2 g/cm³ im Formkörper bei ca. 10 Gew.-% Restfeuchte, was einer Trockenrohdichte von etwa 2 g/cm³ entspricht.

Nachteilig an diesen Briketts ist allerdings deren Zerstörungsanfälligkeit bei mechanischer Belastung aufgrund geringerer Restfeuchte. Die Briketts können nicht zerstörungsfrei verblasen werden. Aus diesem Grund werden im Labor - sowie im halbtechnischen Maßstab - Binärgemische aus möglichst unversehrten Briketts und Feingranulat, welches aus der Zerkleinerung der Briketts generiert wird, lagenweise und händisch vor Ort eingebaut. Dabei lassen sich Einbaufeuchtdichten von 1,7 bis 1,8 g/cm³ für das Gemisch erzielen.

Allerdings hat eine solche Vorgehensweise im technischen Maßstab der Schachtverwahrung zur Folge, dass die Baustoffe bzw. die Komponenten (Briketts und Granulat) in Kübeln über die Seilfahrt vor Ort gebracht werden müssen. Legt man für eine Seilfahrt 20 bis 30 Minuten zugrunde, dann wären für eine Lage mit 24 t Baustoff die doppelte Anzahl (ca. 48) Seilfahrten notwendig, was einem Zeitbedarf von ca. 24 Stunden entspricht. Danach ist das Material händisch einzubauen und leicht zu verdichten, was zu einem Gesamtzeitaufwand für eine Dichtungslage von ca. 30 Stunden führen würde. Dies ist in der Praxis kaum realisierbar, da der geringste Wasserzutritt während dieses Zeitraums den Einbauerfolg unmittelbar zunichtemachen würde.

Somit bestand für den Fachmann nach wie vor die Aufgabe, weitere Verfahren zur Herstellung von Verschlussbauwerken zur Verfügung zu stellen, die insbesondere hinsichtlich der beiden Kernforderungen - Erzielung einer möglichst hohen Dichtigkeit bei einer gleichzeitigen Minimierung der für die Erstellung des Verschlussbauwerks notwendigen Arbeitszeit und Arbeitsleistung vor Ort bzw. untertage - in Summe eine merkliche Verbesserung gegenüber den Verfahren des Standes der Technik aufweisen. Weiterhin sollte ein erfindungsgemäß verbessertes Verfahren auch bezüglich seiner Komplexität bzw. Zahl der Arbeitsschritte gegenüber dem Stand der Technik Vorteile aufweisen.

Dies wird durch das nachfolgend beschriebene erfindungsgemäße Verfahren erreicht, bei dem insbesondere die im Stand der Technik als nachteilig auftretende mechanische Zerstörungsanfälligkeit von trockengepressten Briketts aus bindigem Material vorteilhaft für die erfindungsgemäßen Zwecke genutzt wird.

Es wurde gefunden, dass durch den Einbau mittels losem Versturz von trockengepressten Briketts aus bindigem Material ein kornabgestuftes Material entsteht, welches sich bereits durch leichte Verdichtungsarbeit auf die geforderten Einbaudichten verdichten lässt. Für den Versturz von 24 t Ausgangsmaterial (trockengepresste Formkörper, bevorzugt sogenannte Briketts) kann maximal 1 Stunde Arbeitszeit veranschlagt werden. Ausbreiten und Verdichtung des eingebrachten Materials vor Ort, z.B. mittels einer Vibrationswalze, erfordert maximal eine weitere Stunde, so dass gegenüber dem genannten Beispiel eine Zeitersparnis von bis zu 28 Stunden je Einbaulage realisiert werden kann.

Ebenso kann der Versturz durch den sogenannten Blasversatz über weitere Strecken mit Drücken von bevorzugt ca. 100 kPa (1 bar) erfolgen.

Ein wesentlicher weiterer Vorteil des erfindungsgemäßen Verfahrens besteht darin, dass in diesem Fall nur trockengepresste Formkörper ohne Zwickelfüllung verstürzt werden. Dies hat eine erhebliche Minderung des Staubungsverhaltens des Baustoffs sowie die Ersparnis eines zusätzlichen Aufbereitungsschrittes für den Baustoff zur Folge.

Im Folgenden wird die Erfindung im Detail unter Bezugnahme auf bevorzugte Ausführungsformen beschrieben, welche der Fachmann ohne Mühe auf örtliche Gegebenheiten anpassen kann, falls sich dies als notwendig erweisen sollte.

Bei den erfindungsgemäß eingesetzten verdichteten Formkörpern handelt es sich bevorzugt um Formkörper in Brikettform und diese entsprechen vom äußeren Erscheinungsbild bevorzugt dem bekannten Holzkohlebrikett für Grillzwecke. Grundsätzlich sind jedoch alle Formen für den erfindungsgemäßen Zweck verwendbar. Diese Formkörper entsprechen in ihrer Größe solchen Holzkohlebriketts, können jedoch auch kleiner oder größer sein. Auch können die Abmessungen durchaus denen der Pellets aus der EP 2 843 190 B1 entsprechen (z.B. Länge 5 bis 30 mm, Breite und Dicke jeweils bis zu 20 mm), wobei jedoch eine Zylinderform erfindungsgemäß nicht bevorzugt ist. Aber auch hier können die Formkörper grundsätzlich kleiner oder bevorzugt größer als die genannten Pellets sein. Anzustreben ist eine möglichst isometrische runde Geometrie (Kugel), wobei hier Grenzen durch die Walzengeometrie und Ablösbarkeit der Formkörper aus dem Werkzeug gegeben sind. Da erfindungsgemäße Formkörper auch im Blasversatz eingesetzt werden können, sollten solche Formkörper allgemein blasversatzfähig sein, was zum Beispiel für die vorangehend beschriebenen Typen gewährleistet ist. Unter der Berücksichtigung, dass ein A-Schlauch mit 11 cm Innendurchmesser für Blasversätze der größtmögliche gängige Schlauchtyp ist, sollten die Formkörper maximal die Hälfte des Innendurchmessers in ihrer größten Einzelabmessung (Länge), vorzugsweise aber ein Drittel des Durchmessers aufweisen. Dies entspricht näherungsweise der vorgenannten beispielhaften Länge von 30 mm.

Im Gegensatz zu den Pellets der genannten EP-Schrift, welche durch Vakuumstrangpressung hergestellt werden, werden die erfindungsgemäßen Formkörper, bevorzugt als Briketts, durch geeignete Kompaktierungsverfahren, insbesondere durch Trockenpressung, erzeugt, wodurch sich höhere Trockenrohdichten erzielen lassen. Diese liegen erfindungsgemäß bei Werten von 2 g/cm³ und nur knapp darüber. Durch Trockenpressung sind z.B. Dichten von 2,25 g/cm³ und höhere Werte bei optimalen Bedingungen zu erreichen.

Ein weiterer wichtiger Parameter ist der Wassergehalt der erfindungsgemäßen Formkörper. Während bei den Pellets aus der genannten EP-Schrift der Restwassergehalt 10 oder 8 Gew.-% nicht unterschreiten sollte, da diese sonst die gewünschte mechanische Stabilität nicht aufweisen und beim Versturz dadurch eine erhöhte Bruch- oder Zerstörungsgefahr besteht, liegt der bevorzugte zulässige maximale Wassergehalt bei 6 bis 10 Gew.-%, bevorzugt bei 6 bis 8 Gew.-% Pressfeuchte oder Restwassergehalt. Dadurch zeigen die erfindungsgemäßen Formkörper gerade die gewünschte Bruchanfälligkeit oder auch den gewünschten Zerstörungsgrad bzw. Abrieb bei losem Versturz oder Blasversatz, der für die Zwecke der vorliegenden Erfindung gewünscht und notwendig ist.

Nach einem losen Versturz sind in der Regel bis zu 70 % der Ausgangsformkörper mehr oder weniger bis vollständig zerstört, und das Ergebnis dieser Zerstörung ist ein für die Zwecke der Erfindung geeignetes kornabgestuftes Material. In der Regel weisen ca. 30 % der entstandenen Körner noch eine Größe von mehr als 5,7 mm auf. Die nachfolgende Tabelle 1 gibt eine typische Siebanalyse unter Verwendung eines Riffelteilers für ein nach losem Versturz erhaltenes kornabgestuftes Material wieder.

In zwei Anwendungsbeispielen wurden Zerstörungsversuche im losen Versturz über 300 Meter und übertägig in einem Blasversatz mit einer geringen Fallhöhe, aber einem Ausblasdruck von 100 kPa (1 bar) durchgeführt. Es ist ratsam, in einem konkreten Anwendungsfall baustellenspezifische Anwendungstest oder einen Probeeinbau unter definierten Bedingungen durchzuführen. Die Erstellung von Probefeldern oder Probekörpern im Dichtungsbau ist obligatorisch.

**Tabelle 1: Siebanalyse Riffelteiler nach losem Versturz über 300 Meter**

| Korngröße | Anteil in Gew.-% |
|---|---|
| > 5,6 mm | 29,90 |
| > 4,0 mm | 9,20 |
| > 2,8 mm | 8,80 |
| > 2,0 mm | 9,10 |
| > 1,0 mm | 15,60 |
| > 500 µm | 11,50 |
| > 125 µm | 13,00 |
| < 125 µm | 2,90 |

### Tabelle 2: Übertägiger Blasversatz in eine Erdmulde mit aufgestellten Sammelbehältern

Bei einer Einbringung der erfindungsgemäßen Formkörper mittels Blasversatz kann in Abhängigkeit vom Druck und der Wegstrecke der Anteil an feinem Material noch höher liegen. Dabei ist zu beachten, dass das entstandene feine Material (Abrieb, Granulat) chemisch mit dem Material der eingesetzten Füllkörper identisch ist, da es aus diesem generiert wurde. Dieses feine Material ist also ebenfalls quellfähig. Der Blasdruck liegt dabei bevorzugt im Bereich von 50 kPa (0,5 bar) bis 200 kPa (2 bar).

Die Formkörper gemäß Tabelle 2 wurden mit einem Druck von 100 kPa (1 bar) ausgeblasen.

| Korngröße | Anteil in Gew.-% |
|---|---|
| > 10 mm | 62,90 |
| 5,6 - 10 mm | 9,40 |
| 4 - 5,6 mm | 2,70 |
| 2,8 - 4 mm | 2,60 |
| 2 - 2,8 mm | 2,70 |
| 1 - 2 mm | 6,00 |
| 0,5 - 1 mm | 5,60 |
| 0,25-0,5 mm | 4,20 |
| < 0,25 mm | 3,90 |

Die erfindungsgemäßen Formkörper/Briketts bestehen aus quellfähigem, bindigen Material, dem zur Anpassung des Quelldrucks auch nicht quellfähige Materialien, wie z.B. Sand, beigemischt sein können. Die Formkörper bestehen bevorzugt zu größer als 60 Gew.-%, insbesondere bevorzugt zu größer als 75 Gew.-%, aus quellfähigem, bindigen Material, insbesondere aus Mineralen der Smektitgruppe. Beispiele hierfür sind Montmorillonit, Saponit, Beidellit und Nontronit. Besonders bevorzugt enthalten die Formkörper Bentonit, insbesondere bestehen sie ausschließlich aus Bentonit.

Bentonit ist ein natürliches, plastisches Gestein, welches neben Quarz, Glimmer, Feldspat, Pyrit und auch Calcit als wichtigsten Bestandteil Minerale der Montmorillonit-Gruppe zu ca. 60 bis 90 Gew.-% neben weiteren Tonmineralien enthält. Die beiden wichtigsten Vertreter sind Natriumbentonit und Calciumbentonit, von denen insbesondere der natürliche Calciumbentonit bevorzugt ist, da dieser im Gegensatz zu mit Soda aktiviertem Calciumbentonit keine chemisch instabilen Phasen in den erfindungsgemäßen Formkörpern bildet. Natürliche Natriumbentonite sind in Europa eher selten und sind nur als Importware von Bedeutung.

Beim Bentonit ist im Vergleich zu anderen Materialien das Quellvermögen extrem ausgeprägt. Dies ist in erster Linie auf die negativ geladenen Montmorillonit-Schichten zurückzuführen, zwischen denen sehr leicht Wassermoleküle (Dipol) eingelagert werden können, was im Vergleich zu anderen Mineralen zu sehr starkem Quellvermögen führt. Dabei ist besonders bemerkenswert, dass der Quelldruck exponentiell mit der Dichte (z.B. Trockenrohdichte) des Materials ansteigt. Daher sind die erfindungsgemäßen Formkörper oder Briketts mit einer hohen Dichte (Trockenrohdichte) für den erfindungsgemäßen Zweck besonders geeignet.

Ausgangsmaterial für die Erstellung des Verschlussbauwerks ist somit keine binäre Mischung (z.B. Pellets und inerte Zwickelfüllung) oder verschiedene getrennte Materialien, die als getrennte Schüttungen eingebracht werden. Ausgangsmaterial sind allein die erfindungsgemäßen Formkörper, die bevorzugt aus reinem Bentonit, insbesondere Calciumbentonit, bestehen, trockengepresst bevorzugt in Brikettform vorliegen und bevorzugt Trockenrohdichten von 2 g/cm³ oder mehr aufweisen. Die Briketts erzielen Dichten von 2,2 g/cm³ oder mehr im Formkörper bei nur 10 % Restfeuchte entsprechend einer Trockenrohdichte von etwa 2 g/cm³. Diese Formkörper werden durch losen Versturz oder Blasversatz an den Einbauort transportiert. Abhängig von der zurückgelegten Wegstrecke beim losen Versturz oder dem beim Blasversatz angewandten Druck wird ein Großteil dieser Formkörper ganz oder teilweise zerstört und es bildet sich ein kornabgestuftes Material, welches extrem quellfähig ist und einen hohen Quelldruck aufbaut. Dieses lose eingebrachte Material wird bevorzugt vor Ort ausgebreitet und verdichtet, z.B. mittels einer Vibrationswalze. So entstehen stabile Verschlussbauwerke in beliebiger Dimension mit extrem niedriger Wasserdurchlässigkeit.

## Patentansprüche

1. Verwendung von Formkörpern zur Herstellung von Verschlussbauwerken zum Verschließen von Hohlräumen, die im Untertagebau bei Schachtbauwerken auftreten, und von Dammbauwerken im Streckenverschluss unter Einsatz von losem Versturz oder Blasversatz, wobei die Formkörper zu mindestens 60 Gew.-% aus quellfähigem, bindigem Material bestehen und die Formkörper das alleinige Ausgangsmaterial zur Herstellung der Verschluss- oder Dammbauwerke darstellen.

2. Verwendung nach Anspruch 1, **dadurch gekennzeichnet, dass** als quellfähiges, bindiges Material Bentonit verwendet wird.

3. Verwendung nach Anspruch 1 oder 2, **dadurch gekennzeichnet, dass** die Formkörper eine Brikettform aufweisen.

4. Verwendung nach einem der Ansprüche 1 bis 3, **dadurch gekennzeichnet, dass** als Bentonit Calciumbentonit verwendet wird.

5. Verwendung nach einem der Ansprüche 1 bis 4, **dadurch gekennzeichnet, dass** der Restwassergehalt der Formkörper weniger als 10 Gew.-%, bevorzugt 8 bis 10 Gew.-%, insbesondere 6 bis 8 Gew.-%, beträgt.

6. Verwendung nach einem der Ansprüche 1 bis 5, **dadurch gekennzeichnet, dass** die Herstellung der Formkörper durch Kompaktierungsverfahren, bevorzugt durch Trockenpressung erfolgt.

7. Verwendung nach einem der Ansprüche 1 bis 6, **dadurch gekennzeichnet, dass** die Dichte der Formkörper bei einer Restfeuchte von 10 Gew.-% 2, 2 g/cm3 oder mehr beträgt.

8. Verwendung nach einem der Ansprüche 1 bis 7, **dadurch gekennzeichnet, dass** die Trockenrohdichte der Formkörper 2 g/cm3 oder mehr beträgt.

9. Verfahren zur Herstellung von Verschlussbauwerken zum Verschließen von Hohlräumen, die im Untertagebau be Schachtbauwerken auftreten, und von Dammbauwerken im Streckenverschluss unter Einsatz von losem Versturz oder Blasversatz von Formkörpern, wobei die Formkörper zu mindestens 60 Gew.-% aus quellfähigem, bindigem Material bestehen und die Formkörper als alleiniges Ausgangsmaterial zur Herstellung der Verschluss- oder Dammbauwerke verwendet werden.

10. Verfahren nach Anspruch 9, **dadurch gekennzeichnet, dass** Formkörper gemäß einem der Ansprüche 2 bis 8 verwendet werden.

## Claims

1. Use of shaped bodies for producing closure constructions for the closing of cavities which occur in underground mining in the context of shaft constructions, and for producing dam constructions in section closure using loose spill or pneumatic packing, where the shaped bodies consist to an extent of at least 60 wt% of swellable cohesive material and the shaped bodies constitute the sole starting material for producing the closure or dam constructions.

2. Use according to Claim 1, **characterized in that** the swellable cohesive material used comprises bentonite.

3. Use according to Claim 1 or 2, **characterized in that** the shaped bodies have a briquette shape.

4. Use according to any of Claims 1 to 3, **characterized in that** the bentonite used comprises calcium bentonite.

5. Use according to any of Claims 1 to 4, **characterized in that** the residual water content of the shaped bodies is less than 10 wt%, preferably 8 to 10 wt%, more particularly 6 to 8 wt%.

6. Use according to any of Claims 1 to 5, **characterized in that** the shaped bodies are produced by compacting processes, preferably by dry compression.

7. Use according to any of Claims 1 to 6, **characterized in that** the density of the shaped bodies at a residual moisture content of 10 wt% is 2.2 g/cm3 or more.

8. Use according to any of Claims 1 to 7, **characterized in that** the dry bulk density of the shaped bodies is 2 g/cm3 or more.

9. Process for producing closure constructions for the closing of cavities which occur in underground mining in the context of shaft constructions, and for producing dam constructions in section closure using loose spill or pneumatic packing of shaped bodies, where the shaped bodies consist to an extent of at least 60 wt% of swellable cohesive material and the shaped bodies are used as sole starting material for producing the closure or dam constructions.

10. Process according to Claim 9, **characterized in that** shaped bodies according to any of Claims 2 to 8 are used.

## Revendications

1. Utilisation de corps moulés pour la fabrication d'ouvrages de fermeture pour fermer des cavités, qui apparaissent dans la construction souterraine d'ouvrages de puits, et d'ouvrages de barrage dans la fermeture de galeries en utilisant une chute libre ou un déplacement par soufflage, les corps moulés étant constitués d'au moins 60 % en poids de matériau cohésif apte à gonfler et les corps moulés représentant le seul matériau de départ pour la fabrication des ouvrages de fermeture ou de barrage.

2. Utilisation selon la revendication 1, **caractérisée en ce que** la bentonite est utilisée en tant que matériau cohésif apte à gonfler.

3. Utilisation selon la revendication 1 ou 2, **caractérisée en ce que** les corps moulés présentent une forme de briquette.

4. Utilisation selon l'une quelconque des revendications 1 à 3, **caractérisée en ce que** la bentonite de calcium est utilisée en tant que bentonite.

5. Utilisation selon l'une quelconque des revendications 1 à 4, **caractérisée en ce que** la teneur en eau résiduelle des corps moulés est inférieure à 10 % en poids, de préférence de 8 à 10 % en poids, en particulier de 6 à 8 % en poids.

6. Utilisation selon l'une quelconque des revendications 1 à 5, **caractérisée en ce que** la fabrication des corps moulés s'effectue par un procédé de compactage, de préférence par pressage à sec.

7. Utilisation selon l'une quelconque des revendications 1 à 6, **caractérisée en ce que** la masse volumique des corps moulés est de 2,2 g/cm3 ou plus pour une humidité résiduelle de 10 % en poids.

8. Utilisation selon l'une quelconque des revendications 1 à 7, **caractérisée en ce que** la masse volumique apparente à sec des corps moulés est de 2 g/cm3 ou plus.

9. Procédé de fabrication d'ouvrages de fermeture pour fermer des cavités, qui apparaissent dans la construction souterraine d'ouvrages de puits, et d'ouvrages de barrage dans la fermeture de galeries en utilisant une chute libre ou un déplacement par soufflage de corps moulés, les corps moulés étant constitués d'au moins 60 % en poids de matériau cohésif apte à gonfler et les corps moulés étant utilisés en tant que seul matériau de départ pour la fabrication des ouvrages de fermeture ou de barrage.

10. Procédé selon la revendication 9, **caractérisé en ce que** des corps moulés selon l'une quelconque des revendications 2 à 8 sont utilisés.9. Utilisation de graisses et/ou d'huiles traitées provenant de l'utilisation en cascade ou secondaire pour la préparation d'un combustible ou d'un allume-feu selon l'une quelconque des revendications 1 à 7, le traitement des graisses et/ou des huiles comprenant une étape d'hydrogénation.
